# EUROPÄISCHE PATENTSCHRIFT

(11) **EP 0 953 672 B1**
(45) Veröffentlichungstag und Bekanntmachung des Hinweises auf die Patenterteilung: **02.11.2005**
(21) Anmeldenummer: 99810365.9
(22) Anmeldetag: 29.04.1999
(51) Int. Cl.: D06M 11/36, A47L 13/16, D06M 11/38

(54) **Verfahren zur Verstärkung der Reinigungswirkung einer Reinigungsfaser und eines Reinigungstextils, sowie Reinigungstuch**
Process for enhancing the cleaning properties of a fiber and for the preparation of a cleaning textile and the cleaning textile
Procédé pour lâmélioration des propriétés de nettoyage d'une fibre et pour la production d'un chiffon à nettoyer et le chiffon à nettoyer

(30) Priorität: 30.04.1998 EP 98810390
(43) Veröffentlichungstag der Anmeldung: 03.11.1999
(73) Patentinhaber: Sanamundi Aktiengesellschaft, 9496 Balzers (LI)
(72) Erfinder: Foser, Manfred, 9496 Balzers (LI)
(74) Vertreter: Hasler, Erich

(56) Entgegenhaltungen:
- DE-U- 29 621 156
- US-A- 4 654 911
- PATENT ABSTRACTS OF JAPAN vol. 095, no. 008, 29. September 1995 (1995-09-29) & JP 07 118986 A (TOYOBO CO LTD), 9. Mai 1995 (1995-05-09)
- DATABASE WPI Week 8433 Derwent Publications Ltd., London, GB; Page 05, AN 84-204056 XP002080633 & JP 59 116467 A ((KANE) KANEBO LTD), 5. Juli 1984 (1984-07-05)
- PATENT ABSTRACTS OF JAPAN vol. 015, no. 104 (C-0814), 13. März 1991 (1991-03-13) & JP 03 001831 A (MITSUBISHI RAYON CO LTD), 8. Januar 1991 (1991-01-08)
- PATENT ABSTRACTS OF JAPAN vol. 095, no. 006, 31. Juli 1995 (1995-07-31) & JP 07 070958 A (KANEBO LTD), 14. März 1995 (1995-03-14)
- DATABASE WPI Week 8540 Derwent Publications Ltd., London, GB; Page o4, AN 85-246622 XP002080634 & JP 60 162861 A ((ASAH) ASAH CHEM IND CO LTD), 24. August 1985 (1985-08-24)
- PROF.DR.H.K.ROUETTE: "LEXIKON FÜR TEXTILVEREDLUNG" 1995 , LAUMANN-VERLAG , DÜLMEN XP002110734 * Seite 1252 - Seite 1254 *

## Beschreibung

Die vorliegende Erfindung betrifft ein Verfahren zur Verstärkung der mechanischen Reinigungswirkung einer Kunststofffaser durch Behandlung mit einer alkalischen Lösung und zur Herstellung eines Reinigungstextils, sowie ein Reinigungstextil.

Die DE-A-195 21 780 bezieht sich auf ein Wischtuch zur Entfernung partikulärer Verunreinigungen im Submikronbereich. Zur Verbesserung des Wirkungsgrades des Wischtuchs wird dieses einer Oberflächenbehandlung zugeführt, welche die Faser oder Filamente quer zu deren Ausdehnung mit einer Vielzahl von Kerben versieht, welche in ihren Abmessungen der sphärischen Ausdehnung der zu entfernenden Partikel entsprechen. Dieses Wischtuch findet Verwendung in Reinräumen zur Entfernung von Stäuben von glatten Oberflächen. Für die Verwendung als Reinigungstuch im Haushalt erscheint das Wischtuch jedoch als ungeeignet, da das Reinigungsproblem im Haushalt grundsätzlich ein anderes ist.

Die US 4,654,911 betrifft ein Verfahren zur Degradierung eines Polyester- und/oder Azetatfasern enthaltenden Textils. Zur Degradierung des Textils werden die Fasern mit einer wässerigen alkalischen Lösung behandelt, um die Faserm teilweise chemisch zu zersetzen. Polyesterfasern werden dabei in Ethylenglykol und Terephthalsäure hydrolisiert. Durch diese Behandlung kann ein Textil erhalten werden, welches eine seidenähnliche Weichheit und eine geringere Tendenz zu statischen Aufladungen besitzt. Darüberhinaus hat das so behandelte Textil eine verbesserte Farbechtheit und eine geringe Tendenz zur Fleckenbildung. In der US 4,654,911 sind keine Anregungen zu finden, die darauf schliessen liessen, dass die behandelten Textilien eine verbesserte Reinigungswirkung hätten.

Die JP-A-07 118986 offenbart ein Tuch mit einem scharfkantigen Effekt, welches angeblich exzellente Wischeigenschaften hat. Das gewebte Tuch wird hergestellt aus einer ternären Faser aus einem (A) thermoplastischen Polymer aus Polyethylenterephthalat, (B) einem weiteren thermoplastischen Copolymeren aus Polyethylenterephthalat und Isophthalsäure mit einem anderen thermischen Schrumpfverhalten als der Kunststoff (A), und (C) einem alkalisch leicht löslichen Kunststoff, welcher durch Mischen des Kunststoffs (B) mit Polyethylenglykol erhalten wird. Die Kunststoffe (A) und (B) besitzen fächerartige Querschnitte mit einem Oeffnungswinkel zwischen 20 und 120°, wobei die alkalisch lösliche Komponente zwischen den fächerartigen Querschnitten angeordnet ist. Das aus der Faser gewebte Textil wird mit einer alkalischen Lösung behandelt, um ein Textil mit einer Faserfeinheit zwischen 0.1 und 2 dtex und axial verdrehte Fasern zu erhalten.

Die JP-A-03001831 betrifft ein Textil mit guten Wischeigenschaften, das kein Staub erzeugt und mit welchem Wassertropfen gut entfernbar sind. Das erwähnte Textil besteht aus 13, vorzugsweise 25 Gewichtsprozenten Acetatfilamentfasern in Kombination mit extrem feinen Filamenten von 0.5 dtex oder weniger. Das Textil ist so hergestellt, dass 2, vorzugsweise 4 Gewichtsprozente von extrem feinen, mittels eines alkalischen Prozesses gewichtsreduzierten Fasern auf dem Textil und 13, vorzugsweise 25 Gewichtsprozent im Textil angeordnet sind. Die Wasseraufnahmefähigkeit des Textils beträgt mehr als 210 Gewichtsprozent.

JP-A-59116467 (Kanebo Ltd.) bezieht sich auf ein Textil mit 40-75 Gewichtsprozenten Cellulosefasern und 80-25 Gewichtsprozenten konjugaten Fasern (=Bikomponentenfaser) enthaltend Polyester, welche durch eine alkalische Behandlung in Fibrillen von weniger als 1, vorzugsweise < 0.5 denier geteilt werden. Das so behandelte Textil hat eine hohle Reinigungskraft. Offensichtlich ist es ein Ziel der JP-A--59116467 durch den Einsatz einer Bikomponentenfaser und der anschliessenden alkalischen Behandlung möglichst dünne Fäserchen herstellen zu können.

Es ist Aufgabe der vorliegenden Erfindung ein Verfahren zur Verbesserung der mechanischen Reinigungswirkung und eine Reinigungsfaser sowie ein Reinigungstextil mit einer verbesserten mechanischen Reinigungswirkung zur Verfügung zur stellen. Das Reinigungstextil soll sich insbesondere gut für die mechanische Reinigung von glatten und strukturieren Oberflächen eignen. Weiter ist es ein Ziel, ein Reinigungstextil resp. Reinigungstuch bereitzustellen, welches ohne chemische Reinigungsmittel einzusetzen ist und beim Putzen keine Striemen hinterlässt.

Erfinduhgsgemäss wird dies erreicht, indem zur Verbesserung der Reinigungskraft Einkomponenten-Polyester- oder Polyamid-Mikrofasern mit einer alkalischen Lösung, welche das Fasermaterial anzugreifen vermag, kontaktiert werden. Die Behandlung mit der alkalischen Lösung hat zum Ziel, die mechanische Reinigungswirkung der Faseroberflächen zu verbessern. Es hat sich gezeigt, dass durch die Behandlung der Fasern oder Filamente mit Chemikalien, z.B. mit alkalischen Lösungen, die das Fasermaterial zu attackieren, d.h. teilweise an- oder aufzulösen vermögen, die Oberflächen der Fasern wenigstens teilweise aufgerauht werden können und dass dadurch die mechanische Reinigungswirkung der Fasern überraschenderweise wesentlich verbessert wird. Es wird vermutet, dass die verbesserte Reinigungswirkung mit einer Vergrösserung der Faseroberflächen korreliert und/oder die Affinität der Fasern für Staubpartikel erhöht wird. Durch die Vergrösserung der Faseroberflächen werden auch die Angriffsflächen vergrössert. Im Unterschied zur JP-A-59116467 resp. JP-A-07 118986 werden keine Bikomponentenfasern oder ternäre Fasern sondern Einkomponenten-Polyester- oder Polyamid-Mikrofasern eingesetzt. Da bereits Mikrofasern eingesetzt werden, ist es kein erklärtes Ziel der vorliegenden Erfindung, die Fasern weiter aufzuspalten, sondern lediglich durch die alkalische Behandlung die Faseroberfläche zu vergrössern. Vorteilhaft werden die Oberflächen der Fasern mit einer wässerigen alkalischen Lösung behandelt. Überraschenderweise kann mittels einer wässerigen alkalischen Behandlung die Schabewirkung der Fasern verbessert werden. Von Bedeutung ist auch, dass durch eine alkalische Behandlung die Kapillarwirkung der Mikrofasern verbessert werden kann.

Vorzugsweise wird der Grad der Aufrauhung anhand des durch die Behandlung bewirkten gewichtsmässigen Materialschwunds gemessen, obwohl grundsätzlich auch andere Methoden, wie z.B. in der US4,654,911 beschrieben, zur Verfügung stehen. Die Bestimmung des durch die Behandlung eingetretenen gewichtsmässigen Verlustes erlaubt es, mit relativ einfachen Mitteln den Prozess zu kontrollieren. Bevorzugt wird durch eine Anlaugung mit einer wässerigen, alkalischen Lösung ein messbarer gewichtsmässiger Materialschwund, z.B. von wenigstens 5%, vorzugsweise von wenigstens 10%, und ganz besonders bevorzugt von wenigstens 20 Gewichtsprozenten bewirkt. In der Praxis hat sich gezeigt, dass bereits durch eine alkalische Behandlung, welche einen ungefähr 5%-igen Gewichtsverlust hervorruft, der mechanische Reinigungseffekt der Fasern schon deutlich verbessert we rden kann.

Vorzugsweise wird das Anlaugeverfahren auf Polyamid- oder Polyesterfasern angewendet.

Vorteilhaft wird die gewebte oder gewirkte Ware alkalisch angelaugt. Die Ware kann dabei in Textilbahnen vorliegen, die zwecks Aufrauhung durch ein wässeriges, alkalisches Bad transportiert wird. Besonders geeignet ist das vorgeschlagene Verfahren zur Aufrauhung von Mikrofasern, bei welchen aufgrund ihrer geringen Zugstärke und Feinheit eine mechanische Oberflächenbearbeitung nicht möglich ist.

Gegenstand der vorliegenden Erfindung ist auch ein Reinigungstextil mit nach dem oben beschriebenen Verfahren behandelten Mikrofasern mit einem Besatz mit Polyester-Mikrofasern, vorzugsweise Mikrofaserschlingen. Die Mikrofasern besitzen eine Feinheit zwischen >0 bis maximal 1 dtex. Obwohl die Mikrofasern grundsätzlich als Polfasern vorgesehen sein können, sieht eine bevorzugte Ausführungsform vor, dass die Mikrofasern als Schlingen ausgeführt sind mit einer Mindestschlingenlänge von wenigstens 4 mm, vorzugsweise mehr als 6 mm und ganz besonders bevorzugt von mehr als 8 mm.

Ein besonders vorteilhaftes Reinigungstextil ist gekennzeichnet durch ein erstes Reinigungstextil mit einem Besatz mit Polyester-Mikrofasern in Kombination mit einem in Grösse ungefähr dem ersten Reinigungstextil entsprechenden zweiten Textil, welches an der dem Besatz gegenüberliegenden Seite des ersten Reinigungstextils angeordnet ist, mit einem Besatz mit Fasern einer Wasserabsorptionsfähigkeit von wenigstens 200% des Eigengewichts des zweiten Textils. Durch das Vorsehen eines saugstarken Textils, welches in flächigem Kontakt mit dem ersten Textil mit verbesserter mechanischer Reinigungswirkung steht, wird erreicht, dass die Mikrofasern gleichmässig mit Feuchtigkeit versorgt und Schmutz angelöst werden kann. Obwohl der Besatz des zweiten Textil nach innen, d.h. zur Rückseite des ersten Textils hin, orientiert sein kann, ist dieser bevorzugt nach aussen orientiert und besitzt eine Wasserabsorptionsfähigkeit von wenigstens 600%, vorzugsweise mehr als 800% und ganz besonders bevorzugt von mehr als 1000% des Eigengewichts.

Nachfolgend werden Ausführungsbeispiele der Erfindung unter Bezugnahme auf die Figuren beschrieben. Es zeigt:
- Fig. 1: in perspektivischer Ansicht ein Reinigungstuch bestehend aus einem ersten und einem zweiten Textil, wobei das erste Textil nach dem erfindungsgemässen Verfahren hergestellt ist und eine verbesserte mechanische Reinigungswirkung besitzt, und das zweite Textil ein solches mit einer hohen Wasserabsorptionsfähigkeit ist;
- Fig. 2: eine Draufsicht auf die Reinigungsoberfläche des ersten Textils;
- Fig. 3: im Schnitt eine Teilansicht durch das Reinigungstuchs von Fig. 1; und
- Fig. 4: eine Draufsicht auf die Reinigungsoberfläche des zweiten Textils.

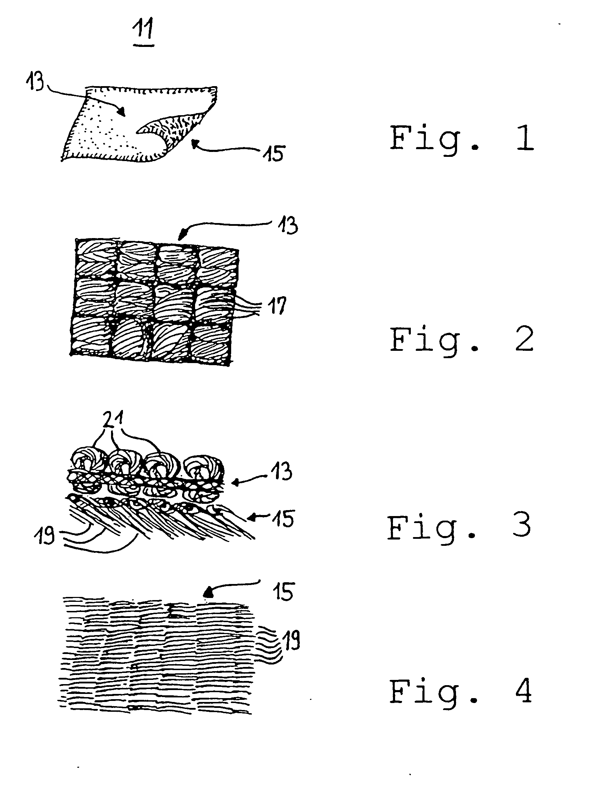

Das in den Figuren 1 bis 4 gezeigte Ausführungsbeispiel eines Reinigungstextil 11 besteht aus zwei unterschiedlichen textilen Geweben 13,15, einem ersten Textil 13 mit einem Besatz von ersten Mikrofasern 17 und einem zweitem Textil 15 mit einem Besatz von zweiten Fasern 19. Die ersten Fasern 17 sind vorzugsweise Polyester-Mikrofasern und die zweiten Fasern 19 vorzugsweise Viskosefasern. Die Polyesterfasern 17 definieren eine erste Reinigungsoberfläche mit verbesserter mechanischer Reinigungskraft und die Viskosefasern 19 eine zweite Reinigungsoberfläche mit einer hohen Wasserabsorptionsfähigkeit. Die beiden Textilien 13,15 sind an ihrem Umfangsrand durch einen nicht näher dargestellten Saum miteinander verbunden. Die beiden Reinigungsoberflächen sind dabei nach aussen orientiert, sodass verschmutzte Oberflächen je nach Bedarf mit der einen oder der anderen Reinigungsoberfläche gereinigt werden können.

Gemäss dem gezeigten Ausführungsbeispiel (Fig. 1 bis 4) sind die ersten Fasern 17 in Form von Schlingen 21 einer Länge von wenigstens 4 mm und vorzugsweise mehr als 6 mm, und ganz besonders bevorzugt einer Länge zwischen 8 mm bis 12 mm entsprechend einer Fadenlänge der Schlinge von ungefähr 16 bis ca. 24 mm an einer Seite des ersten Textils 13 angeordnet (Fig. 3). Die angegebene Länge der Mikrofaserschlingen bezieht sich dabei auf deren effektive Länge der Schlinge bis zum textilen Grundgewebe, wo die Schlinge verankert ist. Zur Bestimmung der Schlingenlänge müssen die normalerweise gekräuselten oder zusammengezogenen Schlingen gestreckt werden. Die Schlingen 21 sind vorzugsweise aus einem ungezwirnten Filamentgarn der entsprechenden Fasern 17 gebildet, obwohl grundsätzlich auch ein gezwirntes Garn einsetzbar ist. Das Filamentgarn besteht vorzugsweise aus 100 bis 200 Fasern. Die Feinheit der Fasern beträgt maximal 1 Dezitex. Ein bevorzugtes Reinigungstextil besitzt Fasern einer Feinheit zwischen ungefähr 0.1 und 1 dtex. Die Schlingen 21 sind am Textilgrundgewebe angeordnet und an diesem mittels einer in den Figuren nicht ersichtlichen, den Wasseraustausch nicht behindernden, durchlässigen Kunststoffbeschichtung, z.B. einem thermoplastischen Kunststoff, fixiert. Die Verankerung der Schlingen am Textilgrundgewebe kann anstatt mit einer Kunststoffbeschichtung beispielsweise auch durch Verschweissen mit thermoplastischen Fäden oder durch Tuften erfolgen.

Die Fasern 19 des zweiten Textils sind von einer Seite des Textils 15 abstehende Fransen oder Polfasern (Fig. 3 und 4). Die Polfasern besitzen vorteilhaft eine Mindestlänge von 4mm und vorzugsweise eine Länge von 4 bis ca. 12 mm. Obwohl grundsätzlich Baumwollfasern, Leinen verwendet werden können, kommen vorzugsweise auf dem Markt erhältliche Viskosefasern zum Einsatz. In einer vorteilhaften nicht gezeigten Ausführungsform sind auch die Fasern 19 des zweiten Textil als Schlingen angeordnet, wodurch deren Reinigungswirkung verbessert werden kann.

Die Herstellung eines Reinigungstextils mit Mikrofasern verbesserter Reinigungswikung geschieht folgendermassen: Zunächst werden die Mikrofasern oder Mikrofilamente aus Polyamid oder Polyester in den gewünschten Feinheiten zu einem gewebten oder gewirken Textil verarbeitet. Üblicherweise werden die Mikrofasern dabei entweder als Polfasern oder als Schlingen an einem textilen Grundgewebe angeordnet. Das gewebte oder gewirkte Textil mit den Reinigungsfasern wird in Bahnen einer bestimmten Breite hergestellt. Die fertigen Textilbahnen werden sodann ausgerüstet, d.h. veredelt. Darunter sind Verfahrensschritte wie beispielsweise Einfärben, Waschen, Imprägnieren usw. zur verstehen. Diese Veredelungsschritte können vor oder nach der alkalischen Behandlung vorgenommen werden.

Erfindungsgemäss kommt nun zu den bekannten Schritten ein weiterer Verfahrensschritt dazu, nämlich das chemische Aufrauhen der mit dem textilen Grundgewebe verbundenen Fasern. Zu diesem Zweck wird die Textilbahn mit einer wässerigen alkalischen Lösung, z.B. Natron- oder Kalilauge einer gewichtsmässigen Konzentration bis zu 30%, vorzugsweise zwischen 5 und 30%, kontaktiert und gegebenenfalls erwärmt. Dies geschieht beispielsweise, indem die Textilbahn durch ein entsprechendes alkalisches Bad geleitet wird oder durch Eintauchen derselben in das Bad. Die optimale Reaktionszeit kann empirisch bestimmt werden, beispielsweise aufgrund des festgestellten Materialschwundes. Die Reaktionszeit hängt ab vom Material und von der Feinheit der eingesetzten Fasern, der Konzentration der alkalischen Lösung und dem Grad der gewünschten Aufrauhung.

Nach einer bestimmten Zeit, nachdem die Faseroberflächen im gewünschten Ausmass angegriffen worden sind, wird die Textilbahn aus dem Alkalibad genommen oder dasselbe neutralisiert, und die restliche Lauge oder Salze werden in einem oder mehreren Waschvorgängen ausgewaschen.

Die Schlingen werden sodann bevorzugt mittels einer durchlässigen Kunststoffbeschichtung mit dem textilen Grundgewebe verbunden. Damit wird eine Verankerung der Schlingen am Grundgewebe erreicht. Die Verankerung verhindert, dass das Reinigungstextil beim Kochen eingeht oder sich verzieht.

Das Einfärben der Textilien kann vor oder nach der alkalischen Behandlung der Fasern erfolgen.

Aus der Textilbahn werden dann Textilstücke der gewünschten Grösse ausgeschnitten und als Reinigungstextile konfektioniert. Die Reinigungstextile können als Reinigungshandschuhe oder Reinigungstücher für Haushalt eingesetzt werden.

Das alkalisch behandelte Textilstück 13 mit verbesserter mechanischer Reinigungskraft wird sodann bevorzugt mit einem saugstarken, zweiten Textil 15 kombiniert, indem die beiden Textilien zusammengenäht oder -geschweisst werden, wobei auf eine ausreichende Wasserdurchlässigkeit zwischen den beiden Textilien zu achten ist. Auf diese Weise erhält man ein besonders vorteilhaftes Reinigungstextil mit guter mechanischer Reinigungswirkung. Die verbesserte Reinigungswirkung ist darauf zurückzuführen, dass das saugstarke Textil als Wasserspeicher dient und in der Lage ist, beim Putzen Wasser an das Mikrofasertuch abzugeben oder auch aufzunehmen und dass die alkalisch behandelten Fasern insgesamt eine verbesserte mechanische Reinigungswirkung haben. Bei der mechanischen Reinigung von verschmutzten Oberflächen ist die richtige aber nicht zu exzessive Benetzung der verschmutzten Oberflächen nämlich besonders wichtig. In diesem Zusammenhang ist auch die durch alkalische Behandlung erreichte Verbesserung der Kapillarwirkung der Mikrofasern ebenfalls von Bedeutung. Ein weiterer Vorteil des beschriebenen Reinigungstuchs ist, dass durch Nachputzen mit der saugstarken Seite des Reinigungstuchs auf der Oberfläche verbleibende Wasserresten entfernt werden können, sodass keine Striemen zurückbleiben.

Die vorliegende Erfindung beschränkt sich nicht auf die gezeigten Ausführungsbeispiele beschränkt, sondern es sind verschiedene Abwandlungen möglich. Es ist z.B. denkbar, im Falle eines Wischmops die zweite Reinigungsoberfläche gegen die Rückseite des ersten Textils zu orientieren, sodass nur die Reinigungsoberfläche mit verbesserter mechanischer Reinigungskraft wirksam ist. Auch können verschiedene Kunststofffasern eingesetzt werden, welche bezüglich Feinheit und Saugvermögen die gestellten Anforderungen zu erfüllen vermögen. Von Bedeutung für eine gute mechanische Reinigungswirkung ist, dass durch einen flächigen Kontakt zwischen den beiden Reinigungstextilen ein guter Flüssigkeitsaustausch stattfinden kann, sodass eine ausreichende aber nicht übermässige Benetzung der zu reinigenden Oberflächen erreicht werden kann. Wird eine Oberfläche zu stark benetzt, so besteht nämlich die Gefahr von Striemenbildung.

## Patentansprüche

1. Verfahren zur Verstärkung der mechanischen Reinigungswirkung einer Kunststofffaser durch Behandlung mit einer alkalischen Lösung, **dadurch gekennzeichnet, dass** zur Verbesserung der Reinigungskraft eine Einkomponenten-Polyester- oder Polyamid-Kunststoff-Mikrofaser mit einer alkalischen Lösung behandelt wird derart, dass die Fasern teilweise an- oder aufgelöst werden.

2. Verfahren nach Anspruch 1, **dadurch gekennzeichnet, dass** die Fasern durch die Behandlung mit der alkalischen Lösung aufgerauht werden, wobei der Grad der alkalischen Aufrauhung anhand des gewichtsmässigen Materialschwunds gemessen werden kann.

3. Verfahren nach einem der Ansprüche 1 oder 2, **dadurch gekennzeichnet, dass** durch die alkalische Anlaugung ein gewichtsmässiger Materialschwund von wenigstens ungefähr 5%, vorzugsweise von wenigstens 10%, und ganz besonders bevorzugt von wenigstens 20% erzeugt wird.

4. Verfahren zur Herstellung eines Reinigungstextils mit verbesserter mechanischer Reinigungswirkung, bei welchem Verfahren eine Kunststoff-Mikrofaser zu einer gewebten oder gewirkten Ware verarbeitet und dann nachbehandelt wird, **dadurch gekennzeichnet, dass** ein gewebtes oder gewirktes Reinigungstextil bestehend im wesentlichen aus Einkomponenten-Polyester- oder Polyamid-Mikrofasern (17) mit einer alkalischen Lauge behandelt wird derart, dass die Fasern teilweise an- oder aufgelöst werden.

5. Verfahren nach Anspruch 4, **dadurch gekennzeichnet, dass** durch die chemische Behandlung ein messbarer gewichtsmässiger Schwund der gewebten oder gewirkten Ware eintritt, wobei der eingetretene Gewichtsschwund als Mass für die bewirkte Aufrauhung der Mikrofasern hergenommen werden kann.

6. Verfahren nach Anspruch 4 oder 5, **dadurch gekennzeichnet, dass** durch die chemische Behandlung ein gewichtsmässiger Schwund der gewebten oder gewirkten Ware von wenigstens 5%, vorzugsweise von wenigstens 10%, und ganz besonders bevorzugt von wenigstens 20% erzeugt wird.

7. Verfahren nach einem der Ansprüche 1 bis 6, **dadurch gekennzeichnet, dass** ein anderer Veredelungsschritt, z.B. Einfärbung, vor oder nach der alkalischen Behandlung erfolgt.

8. Reinigungstextil (13) erhältlich **dadurch**, dass eine gewebte oder gewirkte Ware bestehend im wesentlichen aus Einkomponenten-Polyester- oder Polyamid-Mikrofasern (17), vorzugsweise aus Polyester-Mikrofasern, zur Verbesserung der mechanischen Reinigungswirkung alkalisch angelaugt wird derart, dass die Polyester oder Polyamid Mikrofasern teilweise an- oder aufgelöst werden.

9. Reinigungstextil nach Anspruch 8, **dadurch gekennzeichnet, dass** durch die alkalische Anlaugung ein gewichtsmässiger Schwund der gewebten oder gewirkten Ware von wenigstens ungefähr 5%, vorzugsweise von wenigstens 10%, und ganz besonders bevorzugt von wenigstens 20% erzeugt wird.

10. Reinigungstuch (11) mit einem ersten Reinigungstextil (13) nach Anspruch 7 oder 8 mit einem Besatz mit Polyester-Mikrofasern in Kombination mit einem in Grösse ungefähr dem ersten Reinigungstextil entsprechenden zweiten Textil (15), welches an der dem Besatz gegenüberliegenden Seite des ersten Reinigungstextils (13) angeordnet ist, mit einem Besatz mit Fasern einer Wasserabsorptionsfähigkeit von wenigstens 200% des Eigengewichts des zweiten Textils.

11. Reinigungstuch (11) nach Anspruch 10, **dadurch gekennzeichnet, dass** das erste Textil einen Besatz mit Polyester-Mikrofaserschlingen (21) aufweist.

12. Reinigungstuch (11) nach Anspruch 11, **dadurch gekennzeichnet, dass** die Mindestschlingenlänge wenigstens 4 mm, vorzugsweise mehr als 6 mm und ganz besonders bevorzugt mehr als 8 mm beträgt.

13. Reinigungstuch (11) nach einem der Ansprüche 10 bis 12, **dadurch gekennzeichnet, dass** die Fasern des zweiten Textils (15) eine Wasserabsorptionsfähigkeit von wenigstens 600%, vorzugsweise mehr als 800% und ganz besonders bevorzugt von mehr als 1000% des Eigengewichts besitzen.

## Claims

1. Method for reinforcing the mechanical cleaning effect of a synthetic fiber by treatment with an alkaline solution, **characterized in that** for improving the cleaning force a one-component polyester or polyamide synthetic microfiber is treated with an alkaline solution in such a manner that the fibers are partially being dissolved or dissolved.

2. Method according to claim 1, **characterized in that** the fibers are napped by the treatment with the alkaline solution, whereby the degree of the alkaline napping can be measured by means of the weight related material shrinking.

3. Method according to any of the claims 1 or 2, **characterized in that** through the alkaline solution a weight related material shrinking of at least approximately 5%, preferably of at least 10% and particularly preferably of at least 20% is produced.

4. Method for producing a cleaning textile with an improved mechanical cleaning effect, method for which a synthetic microfiber is processed to a woven or knitted fabric and then subsequently treated, **characterized in that** a woven or knitted cleaning textile made essentially of one component polyester or polyamide microfibers (17) is treated with an alkaline solution in such a manner that the fibers are partially being dissolved or dissolved.

5. Method according to claim 4, **characterized in that** due to the chemical treatment a measurable weight related shrinking of the woven or knitted fabric takes place, whereby the weight related shrinking which has taken place can be used as a measure for the caused napping of the microfibers.

6. Method according to claim 4 or 5, **characterized in that** due to the chemical treatment a weight related shrinking of the woven or knitted fabric of at least 5%, preferably of at least 10% and particularly preferably of at least 20%, is produced.

7. Method according to any of the claims 1 to 6, **characterized in that** another upgrading step, for example colouration, takes place before or after the alkaline treatment.

8. Cleaning textile (13) obtainable in that a woven or knitted fabric made essentially of one component polyester or polyamide microfibers (17), preferably of polyester microfibers, is treated with an alkaline solution for improving the mechanical cleaning effect in such a manner that the polyester or polyamide microfibers are partially being dissolved or dissolved.

9. Cleaning textile according to claim 8, **characterized in that** due to the alkaline solution a weight related shrinking of the woven or knitted fabric of at least 5%, preferably of at least 10% and particularly preferably of at least 20%, is produced.

10. Cleaning cloth (11) with a first cleaning textile (13) according to claim 7 or 8 with a trimming with polyester microfibers combined with a second textile (15) corresponding in size approximately with the first cleaning cloth which is placed on the side of the first cleaning textile (13) which is opposite to the trimming, with a trimming with fibers with a water absorption power of at least 200% of the own weight of the second textile.

11. Cleaning cloth (11) according to claim 10, **characterized in that** the first textile has a trimming with polyester microfiber loops (21).

12. Cleaning cloth (11) according to claim 11, **characterized in that** the minimal loop length is of at least 4 mm, preferably of more than 6 mm and particularly preferably of more than 8 mm.

13. Cleaning cloth (11) according to any of the claims 10 to 12, **characterized in that** the fibers of the second textile (15) have a water absorption power of at least 600%, preferably of more than 800% and particularly preferably of more than 1000% of the own weight.

## Revendications

1. Procédé pour le renforcement de l'effet de nettoyage mécanique d'une fibre synthétique par traitement avec une solution alcaline, **caractérisé en ce que** pour améliorer la force de nettoyage une microfibre synthétique en polyester ou en polyamide à une composante est traitée avec une solution alcaline de telle manière que les fibres sont partiellement en cours de dissolution ou dissoutes.

2. Procédé selon la revendication 1, **caractérisé en ce que** les fibres sont rendues rugueuses par le traitement avec la solution alcaline, le degré de rugosité alcaline pouvant être mesuré à l'aide du retrait de matière en poids.

3. Procédé selon l'une des revendications 1 ou 2, **caractérisé en ce que** par la lessive alcaline on produit un retrait de matière en poids d'au moins environ 5%, de préférence d'au moins 10% et de manière tout particulièrement préférée d'au moins 20%.

4. Procédé pour la fabrication d'un textile de nettoyage avec un effet de nettoyage mécanique amélioré, procédé pour lequel une microfibre synthétique est transformée en une étoffe tissée ou tricotée et est ensuite traitée ultérieurement, **caractérisé en ce qu'**un textile de nettoyage tissé ou tricoté constitué essentiellement de microfibres en polyester à une composante ou en polyamide (17) est traité avec une lessive alcaline de telle manière que les fibres sont partiellement en cours de dissolution ou dissoutes.

5. Procédé selon la revendication 4, **caractérisé en ce qu'**à cause du traitement chimique il intervient un retrait en poids mesurable de l'étoffe tissée ou tricotée, le retrait en poids qui est intervenu pouvant être utilisé comme mesure de la rugosité provoquée des microfibres.

6. Procédé selon la revendication 4 ou 5, **caractérisé en ce que** par le traitement chimique on produit un retrait en poids de la marchandise tissée ou tricotée d'au moins 5%, de préférence d'au moins 10%, et de manière tout particulièrement préférée d'au moins 20%.

7. Procédé selon l'une des revendications 1 à 6, **caractérisé en ce qu'**une autre étape d'amélioration, par exemple la coloration, est effectuée avant ou après le traitement alcalin.

8. Textile de nettoyage (13) que l'on obtient par le fait qu'une marchandise tissée ou tricotée constituée essentiellement en microfibres en polyester à une composante ou en polyamide (17), de préférence en microfibres de polyester, est passée à la lessive alcaline pour améliorer l'effet de nettoyage mécanique de telle manière que les microfibres en polyester ou en polyamide sont partiellement en cours de dissolution ou dissoutes.

9. Textile de nettoyage selon la revendication 8, **caractérisé en ce que** par la lessive alcaline on produit un retrait en poids de la marchandise tissée ou tricotée d'au moins 5%, de préférence d'au moins 10%, et de manière tout particulièrement préférée d'au moins 20%.

10. Chiffon de nettoyage (11) avec un premier textile de nettoyage (13) selon la revendication 7 ou 8 avec une garniture de microfibres en polyester combiné à un second textile (15) de taille correspondant à peu près au premier textile de nettoyage, qui est placé sur le côté du premier textile de nettoyage (13) opposé à la garniture, avec une garniture avec des fibres d'une capacité d'absorption d'eau d'au moins 200% du poids propre du second textile.

11. Chiffon de nettoyage (11) selon la revendication 10, **caractérisé en ce que** le premier textile présente une garniture avec des boucles de microfibres en polyester (21).

12. Chiffon de nettoyage (11) selon la revendication 11, **caractérisé en ce que** la longueur minimale des boucles est d'au moins 4 mm, de préférence de plus de 6 mm et de manière tout particulièrement préférée de plus de 8 mm.

13. Chiffon de nettoyage (11) selon l'une des revendications 10 à 12, **caractérisé en ce que** les fibres du second textile (15) possèdent une capacité d'absorption d'eau d'au moins 600%, de préférence de plus de 800% et de manière tout particulièrement préférée de plus de 1000% du poids propre.
